# EUROPÄISCHE PATENTSCHRIFT

(11) **EP 1 035 388 B1**
(45) Veröffentlichungstag und Bekanntmachung des Hinweises auf die Patenterteilung: **31.03.2004**
(21) Anmeldenummer: 00101848.0
(22) Anmeldetag: 31.01.2000
(51) Int. Cl.: F25B 43/00, B01D 53/26

(54) **Akkumulator für eine nach dem "Orifice"-Prinzip arbeitende Klimaanlage, insbesondere Fahreuzeugklimaanlage**
Accumulator for an air conditioner working according to the "orifice" principle, in particular for a vehicle air conditioner
Accumulateur pour un appareil de climatisation travaillant selon le principe d' "orifice", en particulier pour un appareil de climatisation de véhicule

(30) Priorität: 11.03.1999 DE 19910775
(43) Veröffentlichungstag der Anmeldung: 13.09.2000
(73) Patentinhaber: HANSA METALLWERKE AG, 70567 Stuttgart (DE)
(72) Erfinder: Hackspacher, Franz, 70794 Filderstadt (DE)
(74) Vertreter: Ostertag, Ulrich, Dr.

(56) Entgegenhaltungen:
- DE-A- 19 505 108
- US-A- 4 182 136
- US-A- 4 194 371
- US-A- 4 651 540
- US-A- 5 201 792
- US-A- 5 701 758
- US-A- 6 062 039
- PATENT ABSTRACTS OF JAPAN vol. 1997, no. 09, 30. September 1997 (1997-09-30) -& JP 09 133437 A (SHOWA ALUM CORP), 20. Mai 1997 (1997-05-20)

## Beschreibung

Die Erfindung betrifft einen Akkumulator für eine nach dem "Orifice"-Prinzip arbeitende Klimaanlage mit den Merkmalen des Oberbegriffes des Patentanspruchs 1. Ein Akkumulator der gennanten Art ist z.B. in der US-A-5 701 758 beschrieben.

Bei nach dem "Orifice"-Prinzip arbeitenden Klimanlagen ist der Trockner/Akkumulator dem Verdampfer nachgeordnet. Das aus dem Verdampfer kommende Kältemittel ist hauptsächlich gasförmig, enthält jedoch noch eine Flüssigphase. Insbesondere diese enthält Feuchtigkeit und Kompressoröl. Aufgabe des Trockners/Akkumulators ist es, unter anderem dem Kältemittel die Feuchtigkeit (Wasser) zu entziehen, das Öl jedoch wieder in den Kältemittelkreislauf zurückzuführen. Außerdem ist die flüssige möglichst vollständig von der gasförmigen Phase zu trennen, so daß ausschließlich gasförmiges Kältemittel den Akkumulator verläßt.

Ein Akkumulator ist in der DE 195 05 108 A1 beschrieben. Diese Druckschrift beschäftigt sich mit dem Teilproblem, das sich im unteren Bereich des Akkumulatorgehäuses ansammelnde Kompressoröl wieder in den Kältemittelkreislauf einzuführen. Hierzu ist im Innenraum des Gehäuses ein erstes Rohr vorgesehen, das mit seinem oberen freien Ende über den Innenraum des Gehäuses mit dem Einlaß kommuniziert und nach unten bis in den Bereich geführt ist, in dem sich das Öl sammelt. In einem Boden dieses Rohres ist eine kleine Öffnung vorgesehen, so daß das Öl in den unteren Bereich dieses Rohres eintreten kann. Ein zweites Rohr ist koaxial innerhalb des ersten Rohres angeordnet und führt nach oben zum Auslaß des Akkumulators. Strömt nun das gasförmige Kältemittel an der Bohrung im Boden des einen Rohres vorbei, so entsteht eine Saugwirkung, durch welche das hier stehende Öl mitgerissen und im Kältemittel als aus kleinen Tropfen bestehender Ölnebel sowie als Film entlang der Rohrwand weitertransportiert wird.

Durch den siphonartigen Verlauf, den die beiden koaxialen Rohre für das Kältemittel bilden, wird zwar auch die Abscheidung der flüssigen Kältemittelphase etwas gefördert, vergleicht man dies mit noch älteren Akkumulatoren, bei denen der Gehäuseeinlaß direkt mit dem Gehäuseauslaß kommunizierte. Gleichwohl ist eine vollständige Abscheidung des flüssigen Kältemittels hierdurch nicht immer gewährleistet.

Aufgabe der vorliegenden Erfindung ist es, einen Akkumulator der eingangs genannten Art derart auszugestalten, daß die Abscheidung und Zurückhaltung der flüssigen Phase des Kältemittels verbessert ist.

Diese Aufgabe wir erfindungsgemäß mit den Merkmalen des Anspruchs 1 gelöst.

Die Erfindung macht sich nach Art eines "Zyklons" Zentrifugalkräfte zunutze, die in einer wirbelartigen Strömung entstehen. Diese Zentrifugalkräfte wirken primär auf die schwereren, flüssigen Bestandteile des Kältemittels, drücken diese gegen die Innenmantelfläche des Gehäuses, wo sie dann nach unten in den unteren Bereich des Gehäuses abströmen können. Dort sammelt sich die flüssige Phase des Kältemittels an und wird durch das hier befindliche Trockenmittel von Feuchtigkeit befreit. Von hier verdampfendes Kältemittel vereinigt sich im oberen Bereich des Gehäuses wieder mit dem zuströmenden Kältemittel.

Durch die erfindungsgemäße Maßnahme ist sichergestellt, daß praktisch kein flüssiges Kältemittel mehr den Akkumulator verlassen kann.

Bekanntlich sind im Motorraum von Kraftfahrzeugen, wo Akkumulatoren der hier interessierenden Art hauptsächlich angebracht werden, die räumlichen Verhältnisse beengt. Es ist daher bekannt, Einlaß und Auslaß des Gehäuses entweder, bezogen auf die Achse des Gehäuses, radial oder axial anzuordnen, je nachdem, wie die Leitungsführung innerhalb des Motorraumes geometrisch unterzubringen ist. Dementsprechend entweder
die Leiteinrichtung eine Leitfläche aufweist, die so gekrümmt oder abgewinkelt ist, daß sie bei radialer Einströmung das Kältemittel in azimutaler Richtung umlenkt;
oder die Leiteinrichtung eine Leitfläche aufweist, die so gekrümmt oder abgewinkelt ist, daß sie bei bezogen auf die Achse des Gehäuses achsparalleler Einströmung
das Kältemittel in azimutaler Richtung umlenkt.

Besonders bevorzugt aber ist diejenige Ausgestaltung des erfindungsgemäßen Akkumulators, bei welcher die Leiteinrichtung sowohl Leitflächen der einen als auch Leitflächen der anderen Art aufweist, sich also sowohl bei achsparalleler Einströmung als auch bei radialer Einströmung zur Erzeugung der gewünschten Wirbel-(Kreis) Strömungskomponente eignet. Die Leitflächen sind als Achtelkugelschalen ausgestaltet. Auf diese Weise können Akkumulatoren mit unterschiedlicher Anordnung von Ein- und Auslaß nach dem Baukastenprinzip gestaltet werden, bei welchen weitestgehend dieselben Teile verwendet werden können. Dies reduziert die Herstellungs- und Lagerhaltungskosten erheblich.

Bei den oben beschriebenen, aus der DE 195 05 108 A1 bekannten Akkumulatoren oder allgemein überall dort, wo die Gasphase des zuströmenden Kältemittels über ein Rohr vom oberen Bereich in den unteren Bereich des Innenraums des Gehäuses und von dort über ein weiteres Rohr nach oben zum Auslaß geführt wird, ist es zweckmäßig, wenn die Leiteinrichtung einstückig an eines der beiden Rohre angeformt ist. Die Leiteinrichtung läßt sich auf diese Weise ohne nennenswerte Zusatzkosten und ohne gesonderten Montagevorgang realisieren.

Ausführungsbeispiele der Erfindung werden nachfolgend anhand der Zeichnung näher erläutert; es zeigen
- Figur 1:: einen Schnitt durch ein erstes Ausführungsbeispiel eines Akkumulators;
- Figur 2:: einen Schnitt gemäß Linie II-II von Figur 1;
- Figur 3:: einen Schnitt, ähnlich der Figur 1, durch ein zweites Ausführungsbeispiel eines Akkumulators;
- Figur 4:: einen Schnitt gemäß Linie IV-IV von Figur 3.

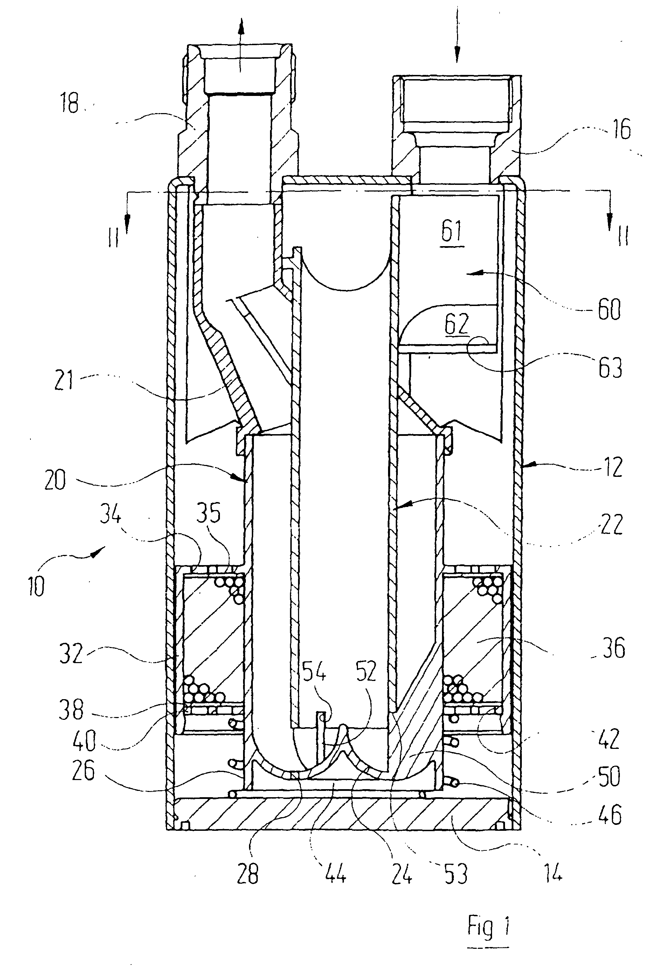

In Figur 1 ist ein Akkumulator insgesamt mit dem Bezugszeichen 10 versehen. Er umfaßt ein becherförmiges Gehäuse 12, das nach unten durch einen Boden 14 abgeschlossen ist. Der Boden 14 kann lösbar und abgedichtet oder permanent an dem Gehäuse 12 befestigt, beispielsweise verschweißt sein.

In der oberen Stirnseite des Gehäuses 12 befindet sich ein axial verlaufender erster Anschlußnippel 16 (in Figur 1 auf der rechten Seite des Gehäuses 12), an welchem ein nicht dargestelltes Kältemittelrohr befestigt werden kann und welcher der Zufuhr des Kältemittels in den Innenraum des Gehäuses 12 dient. Ein zweiter Anschlußnippel 18, an dem ebenfalls ein Kältemittelrohr befestigt werden kann, ist ebenfalls in der oberen Stirnseite des Gehäuses 12 (in Figur 1 links) angeordnet und führt das Kältemittel aus dem Innenraum des Gehäuses 12 ab.

Innerhalb des Gehäuses 12 und koaxial zu diesem ist ein äußeres Rohr 20 eingebracht, das oben über ein Übergangsteil 21 mit dem Anschlußnippel 18 verbunden ist. In das äußere Rohr 20 ist ein inneres Rohr 22 von oben her eingeführt und verläuft zum äußeren Rohr 20 koaxial. Es durchdringt das Übergangsteil 21 und ist hierdurch in der Lage, mit seinem freien oberen Ende mit dem Innenraum des Gehäuses 12 zu kommunizieren.

Das äußere Rohr 20 weist im Bereich seines unteren Endes einen Boden 24 auf, welcher strömungstechnisch glatt angeformt ist und dessen Mitte in in Figur 1 vertikaler Richtung nach oben hin hochgezogen ist. Im Boden 24 ist eine kleine Bohrung 28 vorgesehen. Die Zylinderwand 26 des äußeren Rohres 20 reicht nach unten über dessen Boden 24 hinaus bis in die Nähe des Bodens 14 des Gehäuses 12.

An die äußere Wandfläche des äußeren Rohres 20 ist ein ringförmiger, nach unten offener Behälter 32 angeformt, in dessen oberer ringförmiger Begrenzungswand eine Mehrzahl von Perforationen 34 eingebracht ist. Die äußere Mantelfläche des Behälters 32 liegt an der Innenwand des Gehäuses 12 an, wodurch das äußere Rohr 20 radial gehaltert ist. Der Behälter 32 ist mit Trockenmittel 36 gefüllt und nach unten hin durch eine mit Perforationen 42 versehene Ringscheibe 40 verschlossen. Zwischen der oberen ringförmigen Begrenzungsfläche des Behälters 32 und der Ringscheibe 40 liegt jeweils eine Filzschicht 35 bzw. 38.

Zwischen Ringscheibe 40 und Boden 14 des Gehäuses 12 ist eine Schraubenfeder 46 gespannt, so daß sich das äußere Rohr 20 über den an ihn angeformten Behälter 32 am Boden 14 des Gehäuses 12 abstützt und auf diese Weise einen Abstand vom Boden 14 des Gehäuses 12 einhält.

An die innere Mantelfläche des äußeren Rohres 20 sind in einem Winkelabstand von 120° drei flügelartige Rippen 50, 52 (die dritte ist in der Zeichnung nicht erkennbar) angeformt, welche in kurze Axialschlitze an entsprechenden Stellen im unteren Endbereich des inneren Rohres 22 eingreifen. Auf diese Weise wird das untere Ende des inneren Rohres 22 abgestützt und zentriert.

An das obere Ende des inneren Rohres 22 ist im Bereich unterhalb des Einlaß-Anschlußnippels 16 eine Leiteinrichtung 60 angeformt. Diese Leiteinrichtung 60 umfaßt drei Leitflächen: Eine erste (obere) Leitfläche 61 verläuft im wesentlichen vertikal und ist in der Draufsicht kreisbogenförmig gekrümmt; sie geht in die Mantelfläche des inneren Rohres 22 über. An die erste Leitfläche 61 schließt sich unten eine zweite Leitfläche 62 an, die gegen die Achse der Rohre 22, 44 und damit auch gegen die Strömungsrichtung des über den Einlaß-Anschnippel 16 zuströmenden Kältemittels schräggestellt ist. An den unteren Rand der zweiten Leitfläche 62 schließlich ist eine sehr schmale, dritte Leitfläche 63 angesetzt, die senkrecht zur Achse der Rohre 20, 22 und damit zur Strömungsrichtung des über den Anschlußnippel 16 eintretenden Kältemittels verläuft.

Der oben beschriebene Akkumulator 10 arbeitet wie folgt:

Vom Verdampfer kommendes Kältemittel wird dem Innenraum des Gehäuses 12 des Akkumulators 10 über den Anschlußnippel 16 in achsparalleler Richtung zugeführt. Aufgrund der Leiteinrichtung 60, hier insbesondere aufgrund der zweiten und dritten Leitfläche 62, 63, erfährt das Kältemittel eine Umlenkung in horizontaler und azimutaler Richtung in den Ringraum hinein, der im oberen Bereich zwischen dem inneren Rohr 22 und der Innenfläche des Gehäuses 12 und im unteren Bereich zwischen der äußeren Mantelfläche des äußeren Rohres 20 und der Innenmantelfläche des Gehäuses 12 gebildet ist. Auf diese Weise entsteht eine Wirbel- (Kreis-)strömung um die Achse von Gehäuse 12, äußerem Rohr 20 und innerem Rohr 22. Aufgrund der Zentrifugalkraft, die durch diese Ringströmung hervorgerufen wird, sammelt sich die in dem zuströmenden Kältemittel enthaltene flüssige Phase an der Innenmantelfläche des Gehäuses 12 und strömt an dieser nach unten ab. Hierdurch wird die Abscheidewirkung des beschriebenen Akkumulators 10 erheblich erhöht. Aus dem zweiten Anschlußnippel 18 tritt nur noch gasförmiges Kältemittel aus, während sich die flüssige Phase vollständig im unteren Bereich des Behälters 12 sammelt. Dort gelangt das Kältemittel über die Perforationen 34 und die Filzschicht 35 hindurch in die Trockenmittelfüllung 36, wo ihm das Wasser entzogen wird.

Das in dem Kältemittel außerdem enthaltene Öl sinkt aufgrund seines größeren spezifischen Gewichtes nach unten weiter ab und tritt durch die Filzschicht 38 und die Perforationen 42 der Ringscheibe 40 in den Zwischenraum zwischen dem Boden 14 des Gehäuses 12 und der Unterseite des Behälters 32 ein, wo es einen Ölsumpf 44 bildet.

Der gasförmige Teil des über den Anschlußnippel 16 zuströmenden Kältemittels tritt von oben her in das innere Rohr 22 ein und strömt von dort zu dessen unterem Ende. Dort wird es am Boden 24 des äußeren Rohres 20 umgelenkt und strömt in dem Ringraum zwischen innerem Rohr 22 und äußerem Rohr 20 nach oben.

Aufgrund des Abstandes zwischen der Unterseite des Standrohres 20 und dem Boden 14 des Gehäuses 12 gelangt das Öl aus dem Ölsumpf 44 auch in den Bereich unterhalb des Bodens 24 des äußeren Rohres 20. Von dort strömt es nach dem Prinzip der "kommunizierenden Röhren" durch die kleine Bohrung 28 hindurch in den Innenraum des äußeren Rohres 20 und bildet dort einen Ölspiegel. Dieser wird von dem strömenden Kältemittel als Ölfilm auf der Innenseite auf der Wand 26 des äußeren Rohres 20 nach oben getrieben. Über das Übergangsteil 21 gelangen das gasförmige Kältemittel und das mitgeführte Öl zum Anschlußnippel 18 und von dort in das nicht dargestellte Kältemittelrohr

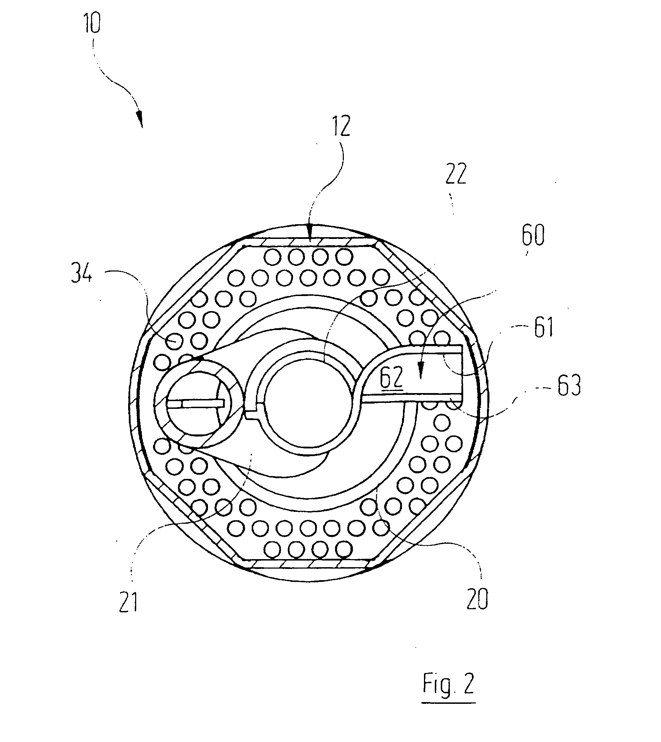

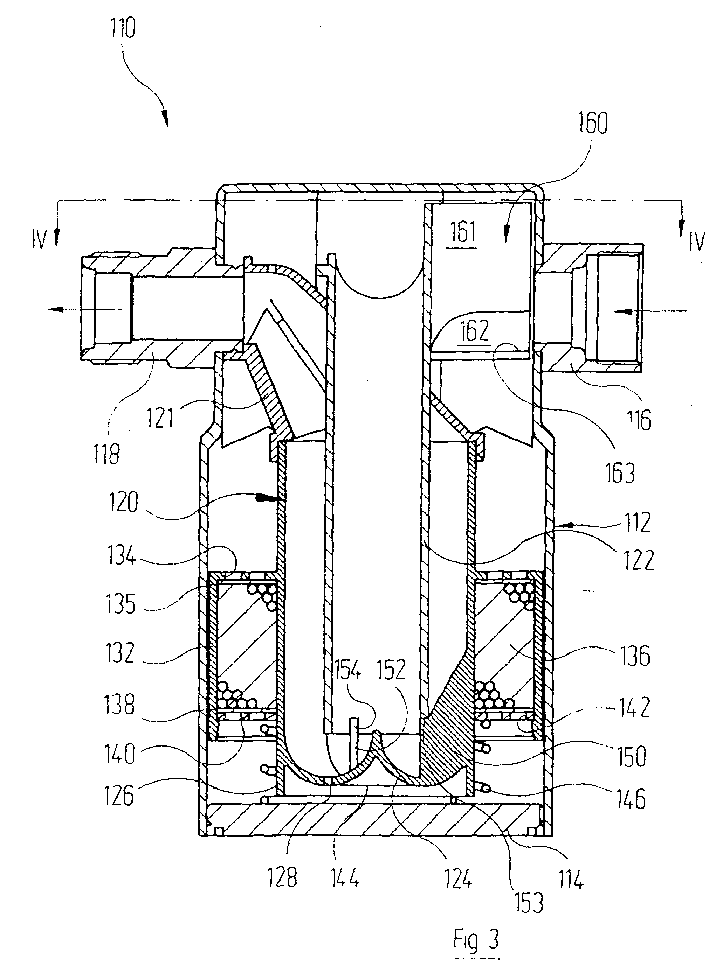

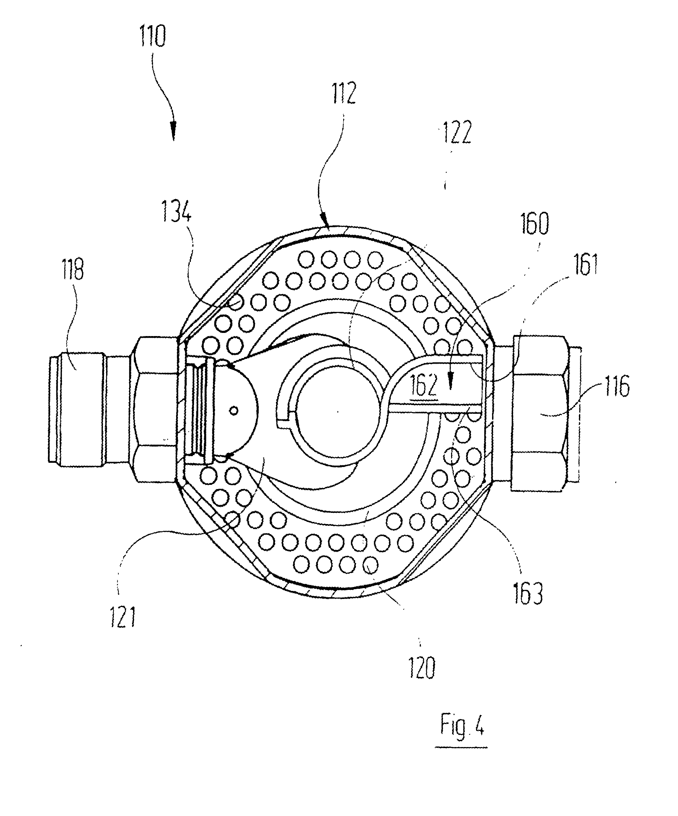

In den Figuren 3 und 4 ist ein zweites Ausführungsbeispiel eines Akkumulators dargestellt, welches demjenigen der Figuren 1 und 2 sehr ähnelt. Entsprechende Teile sind daher mit demselben Bezugszeichen zzgl. 100 gekennzeichnet.

Der in den Figuren 3 und 4 dargestellte Akkumulator 110 unterscheidet sich von dem in den Figuren 1 und 2 dargestellten ausschließlich durch die Anordnung der Anschlußnippel 116 und 118. Diese befinden sich nun beide nicht mehr in der oberen kreisförmigen Stirnwand sondern im oberen Bereich der seitlichen Mantelfläche des Gehäuses 112, welches dort sechseckig ausgebildet ist. Das Übergangsstück 121 ist entsprechend ausgebildet. Alle andere Teile des Akkumulators 110 der Figuren 3 und 4 entsprechen den jeweiligen Teilen des Akkumulators der Figuren 1 und 2.

Aufgrund der anderen Anordnung der Anschlußnippel 116 und 118 dieses zweiten Ausführungsbeispieles strömt das Kältemittel radial über den Anschlußstutzen 116 in den Innenraum des Gehäuses 112. Erneut wird nunmehr die Leiteinrichtung 160 wirksam, und zwar in diesem Falle primär die erste, obere Leitfläche 161. Diese bewirkt eine Umlenkung des Kältemittelstromes von der radialen in eine azimutale Richtung, wodurch wiederum die oben bereits erwähnte und für die Funktion der Erfindung so wesentliche Wirbel- bzw. Kreisströmung erzielt wird. Die beiden anderen Leitflächen 62, 63 unterstützen diesen Effekt. Im übrigen entspricht die Funktion des Ausführungsbeispieles nach den Figuren 2 und 3 derjenigen des Ausführungsbeispieles der Figuren 1 und 2.

## Patentansprüche

1. Akkumulator für eine nach dem "Orifice"-Prinzip arbeitende Klimaanlage, insbesondere Fahrzeugklimaanlage, mit
a) einem Gehäuse (12), das einen Einlaß (16) und einen Auslaß (18) für ein Kältemittel aufweist;
b) einem im unteren Bereich des Innenraumes des Gehäuses untergebrachten Trockenmittel,
wobei
c) dem Einlaß des Gehäuses benachbart in dessen Innenraum eine Leiteinrichtung (60) vorgesehen ist, welche das zuströmende Kältemittel umlenkt,
**dadurch gekennzeichnet, daß**
d) die Umlenkung des Kältemittels durch die Leiteinrichtung (60) so erfolgt, daß das zuströmende Kältemittel eine Wirbel-(Kreis)Strömungskomponente entlang der Innenmantelfläche des Gehäuses (12) erhält,
e) die Leiteinrichtung (60) eine Leitfläche (62, 63) aufweist, die so gekrümmt oder abgewinkelt ist, daß sie bei bezogen auf die Achse des Gehäuses (12) achsparalleler und/oder radialer Einströmung das Kältemittel in azimutaler Richtung umlenkt, und
f) die Leitfläche (62) eine Achtelkugelschale ist.

2. Akkumulator nach Anspruch 1 bei welchem die Gasphase des zuströmenden Kältemittels über ein Rohr vom oberen Bereich in den unteren Bereich des Innenraums des Gehäuses und von dort über ein weiteres Rohr nach oben zum Auslaß geführt wird, **dadurch gekennzeichnet, daß** die Leiteinrichtung (60; 160) einstückig an eines der beiden Rohre (22; 122) angeformt ist.

## Claims

1. Accumulator for an air conditioner, in particular vehicle air conditioner, working on the orifice principle, having
a) a housing (12) with an inlet (16) and an outlet (18) for a refrigerant;
b) a drying agent accommodated in the lower region of the interior of the housing,
c) there being provided adjacent to the inlet of the housing a directing device (60) which deflects the inflowing refrigerant,
**characterised in that**
d) the deflection of the refrigerant by the directing device (60) is effected in such a way that a turbulent (cyclic) flow component along the inner circumferential surface of the housing (12) is imparted to the inflowing refrigerant,
e) the directing device (60) has a directing surface (62, 63) which is curved or angled in such a way that it deflects the refrigerant in the azimuthal direction in the case of an axially parallel and/or radial inflow in relation to the axis of the housing (12), and
f) the directing surface (62) is an octant of a spherical shell.

2. Accumulator according to Claim 1, in which the gas phase of the inflowing refrigerant is guided via a pipe from the upper region into the lower region of the interior of the housing and from there via a further pipe upwardly to the outlet, **characterised in that** the directing device (60; 160) is integrally formed on one of the two pipes (22; 122).

## Revendications

1. Accumulateur pour une installation de climatisation fonctionnant selon le principe d'orifice, en particulier une installation de climatisation de véhicule automobile, comprenant
a) un logement (12) qui présente une entrée (16) et une sortie (18) pour un fluide frigorigène ;
b) un dessiccateur disposé dans la zone inférieure de l'espace intérieur du logement ;
où
c) un dispositif de conduite (60), qui dévie le fluide frigorigène affluant, est prévu dans cet espace intérieur en position adjacente à l'entrée du logement ;
**caractérisé en ce que**
d) la déviation du fluide frigorigène par le dispositif de conduite (60) s'effectue de telle sorte que le fluide frigorigène affluant reçoit une composante de circulation tourbillonnante (circulaire) le long de la surface intérieure du logement (12) ;
e) le dispositif de conduite (60) présente une surface de guidage (62, 63) qui est courbée ou coudée de telle sorte qu'elle dévie le fluide frigorigène dans une direction azimutale dans le cas d'une arrivée parallèle à l'axe et/ou radiale par rapport à l'axe du logement (12) ; et
f) la surface de guidage (62) est un huitième de coque.

2. Accumulateur selon la revendication 1, dans lequel la phase gazeuse du fluide frigorigène affluant est amenée par un tuyau de la zone supérieure à la zone inférieure de l'espace intérieur du logement, et de cet endroit, par un autre tuyau, vers le haut jusqu'à la sortie, **caractérisé en ce que** le dispositif de conduite (60 ; 160) est formé d'une seule pièce sur l'un des deux tuyaux (22 ; 122).
